## Europäisches Patentamt
## European Patent Office
## Office européen des brevets

(19)

(11) Veröffentlichungsnummer: **0 024 296**
**B1**

(12)

# EUROPÄISCHE PATENTSCHRIFT

(45) Veröffentlichungstag der Patentschrift:
18.05.83

(21) Anmeldenummer: 80104060.1

(22) Anmeldetag: 14.07.80

(51) Int. Cl.³: **C 08 L 75/04**, C 08 J 3/20,
C 09 D 3/72 // C14C11/00

(54) **Verfahren zur Herstellung von stabilen wässrigen Dispersionen von Oligo- oder Polyurethanen, sowie ihre Verwendung als Beschichtungsmittel für flexible oder nicht-flexible Substrate.**

(30) Priorität: 26.07.79 DE 2930410

(43) Veröffentlichungstag der Anmeldung:
04.03.81 Patentblatt 81/9

(45) Bekanntmachung des Hinweises auf die Patenterteilung:
18.05.83 Patentblatt 83/20

(84) Benannte Vertragsstaaten:
BE DE FR GB IT NL

(56) Entgegenhaltungen:
DE-A-1 694 175
DE-A-2 542 767
DE-B-1 669 346
DE-B-2 337 457
US-A-4 048 001

(73) Patentinhaber: BAYER AG, Zentralbereich Patente, Marken und Lizenzen, D-5090 Leverkusen 1, Bayerwerk (DE)

(72) Erfinder: Wenzel, Wolfgang, Dr.,
Peter-Landwehr-Strasse 13, D-5060 Bergisch-Gladbach (DE)
Erfinder: Mertens, Günter, Beringstrasse 2,
D-5090 Leverkusen 3 (DE)
Erfinder: Dieterich, Dieter, Dr., Ludwig-Girtler-Strasse 1,
D-5090 Leverkusen 1 (DE)

ACTORUM AG

Verfahren zur Herstellung von stabilen wässerigen Dispersionen von Oligo- oder Polyurethanen sowie ihre Verwendung als Beschichtungsmittel für flexible oder nicht-flexible Substrate

Die vorliegende Erfindung betrifft ein neuartiges Verfahren zur Herstellung wässeriger Dispersionen oder Lösungen von Oligo- oder Polyurethanen, die in Wasser nicht dispergierbare und unlösliche Hilfs- und Zusatzstoffe enthalten, sowie die Verwendung dieser Lösungen oder Dispersionen als Beschichtungsmittel für flexible oder nicht-flexible Substrate.

Die Herstellung von stabilen, wässerigen Polyurethan/Polyharnstoff-Dispersionen gehört zum bekannten Stand der Technik [z.B. DE-OS Nrn. 1495745, 1770068, 2555534, 2446440, 2543091, US-PS Nrn. 3479310, 3756992, 4108814 oder auch D. Dieterich et al., „Angew. Chem.", 82, 53 (1970)].

Dabei ist zu unterscheiden zwischen Verfahren, die auf die Mitverwendung von Lösungsmitteln angewiesen sind, und sog. lösungsmittelfreien Herstellungsverfahren.

Im ersteren Falle werden hochmolekulare Polyurethane durch Polyaddition in organischer Lösung, also in homogener Phase, aufgebaut, bevor sie in Wasser dispergiert werden. Dieses Verfahren liefert besonders hochwertige Polyurethanfilme, die auch den hohen, an Textilbeschichtungsmittel gestellten Anforderungen genügen.

Unter den lösungsmittelfreien Verfahren sind insbesondere zwei zu nennen, das sog. Schmelzdispergierverfahren, das z.B. im Prinzip in der DE-OS Nr. 1770068 bzw. US-PS Nr. 3756992 beschrieben wird; und das in der DE-OS Nr. 2446440 bzw. US-PS Nr. 4108814 beschriebene Verfahren, bei dem ein Sulfonat- und NCO-Gruppen aufweisendes Präpolymer mit einem Diamin während oder nach dem Dispergiervorgang unter Kettenverlängerung umgesetzt wird.

Diese wässerigen Dispersionen beinhalten alle Vorteile von Polyurethanen, wie z.B. die gute Verarbeitbarkeit und hervorragende physikalische Echtheitseigenschaften.

Andererseits sind sie oft auch mit Nachteilen behaftet, z.B. schlechte, gummiartige Griffeigenschaften bei Deckstrichen und ungenügende Verlaufeigenschaften bei der Verarbeitung der Dispersionen.

Es mangelt daher nicht an Vorschlägen, diese nachteilhaften Eigenschaften durch Zugabe bestimmter Hilfs- und Zusatzmittel zu beseitigen. So wird beispielsweise in DE-OS Nrn. 2138016, US 3816168 oder US 3823102 empfohlen, die Griffeigenschaften von gelösten Polyurethanen durch Zugabe von Nitrozellulose oder anderer Hilfsmittel zu verbessern. Diese Verfahren sind im wesentlichen auf die Verwendung von organischen Lösungen der Hilfsmittel zur Modifizierung von gelösten Polyurethanen beschränkt. In der DE-OS Nr. 2542767 wird vorgeschlagen, Nitrozellulose und/oder Zelluloseacetobutyrat mit Weichmachern und Emulgatoren angereichert und in organischen Lösungsmitteln gelöst einer organischen Lösung eines Polyurethans zuzumischen, um anschliessend diese Kombination in eine wässerige Dispersion zu überführen. Hierbei bleibt das Lösungsmittel in der wässerigen Dispersion, so dass die bekannten Nachteile der lösungsmittelhaltigen Systeme (Brandverhalten, Umweltprobleme) nicht beseitigt sind.

In der DE-OS Nr. 1770068 wird die Modifizierung von Polyurethandispersionen mit den unterschiedlichsten Polymerisaten, Pigmenten u. dgl. beschrieben, wobei insbesondere das bereits dispergierte Polyurethan modifiziert wird. Bei dieser Art der Modifizierung liegen in der Dispersion zwei Produkte nebeneinander vor und trennen sich oftmals wieder, wenn der Zusatz nicht wasserdispergierbar ist. Auch ist es z.B. im Falle der Verwendung von Nitrozellulose notwendig, Weichmacher und Emulgatoren zuzusetzen.

In wässerige Dispersionen, die beispielsweise nach dem Lösungsmittelverfahren gemäss DE-OS Nrn. 1495745 bzw. 1694175 oder gemäss DE-AS Nr. 1669346 unter Verwendung von Aceton hergestellt worden sind, können z.B. acetonlösliche, aber wasserunlösliche Substanzen eingearbeitet werden. Die acetonische Lösung wird mit Wasser in eine homogene Dispersion überführt. Anschliessend wird das Lösungsmittel abgezogen.

Es bestand jedoch das Problem, beliebige wasserunlösliche und in Wasser nicht ohne zusätzliche Mitverwendung von Emulgatoren dispergierbare Zusätze wässerigen Polyurethandispersionen ohne Mitverwendung von leicht entflammbaren Lösungsmitteln so einzuverleiben, dass lagerstabile Dispersionen erhalten werden. Insbesondere bestand das Problem, Hilfsmittel für die Lederzurichtung der nachstehend genannten Art, die in Wasser unlöslich und undispergierbar und oft in organischen Medien unlöslich oder schwer löslich sind, so in zur Lederzurichtung, insbesondere als Leder-Finish geeignete lösungsmittelfreie wässerige Polyurethandispersionen einzuarbeiten, dass lagerstabile, die genannten Hilfsmittel enthaltende Dispersionen erhalten werden.

Diese der Erfindung zugrunde liegenden Aufgaben konnten überraschenderweise durch das nachstehend näher beschriebene erfindungsgemässe Verfahren gelöst werden.

Gegenstand der vorliegenden Erfindung ist ein Verfahren zur Herstellung von lagerstabilen, wässerigen Dispersionen von, eingebaute, die Dispergierbarkeit in Wasser gewährleistende ionische und/oder nicht-ionisch-hydrophile Gruppen und in Wasser nicht dispergierbare oder lösliche Hilfs- und Zusatzmittel enthaltenden Oligo- oder Polyurethanen durch an sich bekannte Überführung von eingebaute potentielle ionische, ionische oder nicht-ionisch-hydrophile und gegebenenfalls eine Kettenverlängerungs- bzw. Vernetzungsreaktion ermöglichende Gruppen aufweisenden Oligourethanen mit einem Molekulargewicht von 1000 bis 10000 in eine wässerige Dispersion durch Vermischen mit Wasser, gegebenenfalls unter gleichzeitiger oder anschliessender Kettenverlängerung der Oligourethane durch Reaktion mit einem Kettenverlängerungsmittel und gegebenenfalls unter zumindest teilweiser Überführung von, gegebenenfalls vorliegenden potentiellen ionischen Gruppen in ionische Gruppen, dadurch gekennzeichnet, dass man als in Wasser nicht dispergierbare oder lösliche Hilfs- und Zusatzmittel Zelluloseäther, Zelluloseester anorganischer oder organischer Säuren und natürliche oder synthetische Wachse verwendet, und die Oligourethane vor ihrer Durchmischung mit Wasser in flüssiger Phase, gegebenenfalls bei erhöhter Temperatur, mit den in Wasser nicht dispergierbaren oder löslichen Hilfs- und Zusatzmitteln innig durchmischt, oder man die Hilfs- und Zusatzmittel bereits in eine der bei der Herstellung der Oligourethane verwendeten Ausgangsverbindungen einarbeitet.

Gegenstand der vorliegenden Erfindung ist auch die Verwendung der so erhältlichen Dispersionen als Beschichtungsmittel für flexible oder nicht-flexible Substrate.

Die Herstellung der beim erfindungsgemässen Verfahren einzusetzenden Oligourethane gehört zum bekannten Stand der Technik und ist beispielsweise in den nachstehend referierten Veröffentlichungen beschrieben.

Bei den für das erfindungsgemässe Verfahren geeigneten Oligourethanen handelt es sich entweder um bei Raumtemperatur flüssige oder durch einfaches Erhitzen auf maximal 150°C schmelzbare Verbindungen eines rechnerischen Molelulargewichts (vgl. US Nr. 3756992, Spalte 23, Zeilen 4-15) von 1000 bis 10 000 und besonders bevorzugt 1200 bis 5000. Die Oligourethane weisen im übrigen eine ihre Dispergierbarkeit in Wasser gewährleistende Menge an eingebauten hydrophilen Gruppen auf, d.h. es handelt sich um (potentielle) anionische und/oder (potentielle) kationische und/oder nicht-ionisch-hydrophile Verbindungen, die im allgemeinen 0 bis 200, vorzugsweise 5 bis 50, besonders bevorzugt 5 bis 20 Milliäquivalente an (potentiellen) ionischen Gruppen in 100 g Feststoff und/oder 0 bis 20, vorzugsweise 1 bis 10 Gew.% an, vorzugsweise innerhalb von Polyätherketten eingebauten, Äthylenoxidsegmente enthalten, wobei in jedem Fall gewährleistet sein muss, dass genügend hydrophile Gruppen für eine Dispergierbarkeit vorhanden sind. Der Begriff potentielle ionische Gruppe bedeutet, dass das Urethan entweder freie Säuregruppen (potentiell anionisch) oder z.B. tertiäre Stickstoffgruppen (potentiell kationisch) enthält, die während des Dispergiervorganges durch ein geeignetes Agenz ganz oder teilweise in eine ionische Gruppe überführt werden können. Diese Überführung einer potentiellen ionischen Gruppe in eine ionische Gruppe geschieht im allgemeinen durch eine an sich bekannte Neutralisationsreaktion.

Zu den bevorzugten ionischen Gruppen gehören die Sulfonatgruppe $-SO_3^-$, die Carboxylatgruppe $-COO^-$ und die Ammoniumgruppe $=N^+=$.

Bei den beim erfindungsgemässen Verfahren einzusetzenden Oligourethanen handelt es sich im übrigen vorzugsweise um Verbindungen mit einer weitgehend linearen Molekülstruktur, die zu Kettenverlängerungs- bzw. Vernetzungsreaktionen befähigte Reaktivgruppen aufweisen. Dies ist jedoch keine erfindungswesentliche Bedingung, da für manche Anwendungsgebiete eine Molekülvergrösserung der Oligourethane nicht erforderlich ist. Zu den besonders bevorzugten, eine Kettenverlängerungsreaktion ermöglichenden Gruppierungen gehören endständig angeordnete Isocyanatgruppen oder endständig angeordnete acylierte Aminogruppen, wie z.B. Biuret- oder Harnstoffgruppen. Für das erfindungsgemässe Verfahren geeignete Oligourethane mit endständigen Isocyanatgruppen sind beispielsweise die in US-PS Nrn. 4108814, 3479310, 3905929, DE-OS Nr. 2721985, oder DE-OS Nr. 2651506 beschriebenen, ionische und/oder nicht-ionisch-hydrophile Gruppierungen aufweisenden NCO-Präpolymere, die, der Lehre dieser Veröffentlichungen entsprechend, durch Reaktion mit Wasser bzw. mit wässerigen Lösungen geeigneter Kettenverlängerungsmittel, insbesondere von organischen Diaminen, in wässerigen Dispersionen von hochmolekularen Polyurethanen überführt werden können. Geeignete Oligourethane sind auch die gemäss DE-OS Nr. 2725589 mit Ketiminen, die gemäss DE-OS Nr. 2732131 mit Oxazolidinen oder die gemäss DE-OS Nr. 2811148 mit Azinen in Gegenwart von Wasser in wässerigen Dispersionen überführbaren Präpolymeren.

Zu den erfindungsgemäss einsetzbaren Oligourethanen gehören auch die endständig acylierte Aminstickstoffatome aufweisenden Oligourethane gemäss US-PS Nrn. 3756992, 4094842 oder DE-OS Nr. 2637690, die, der Lehre dieser Veröffentlichungen entsprechend, mit geeigneten Kettenverlängerungs- bzw. Vernetzungsmitteln, wie z.B. wässerigem Formaldehyd, in wässerige Lösungen bzw. Dispersionen hochmolekularer Polyurethane überführt werden können. Auch die selbstvernetzenden Oligourethane gemäss DE-OS Nr. 2642073 sind für das erfindungsgemässe Verfahren geeignet.

Die erfindungswesentliche Massnahme besteht nun in der Einarbeitung der in Wasser nicht löslichen und nicht dispergierbaren Zusatzmittel in die beispielhaft genannten Oligourethane vor deren Dispergierung in Wasser. In der Regel werden die Zusatzstoffe in das flüssige oder als Schmelze vorliegende Oligourethan eingerührt. Dieser Vorgang wird im allgemeinen bei einer Temperatur zwischen 20 und 150°C, vorzugsweise 50 bis 120°C, durchgeführt. Anschliessend wird die so erhaltene Kombination als 20 bis 150°C, vorzugsweise 40 bis 120°C, warme Flüssigkeit bzw. Schmelze in Wasser bzw. wässeriger Lösung eines Kettenverlängerungsmittels der beispielhaft genannten Art einer zwischen 5 und 100°C, vorzugsweise 20 bis 85°C, liegenden Temperatur dispergiert. Im Falle der Verwendung von verkappten Kettenverlängerungsmitteln für die Oligourethane, beispielsweise von Ketiminen, Oxazolidinen oder Azinen gemäss den obengenannten Veröffentlichungen werden diese Hilfsmittel zusätzlich zu den erfindungswesentlichen Hilfs- und Zusatzstoffen mit dem Oligourethan (NCO-Präpolymer), entsprechend der Lehre dieser Veröffentlichungen, vor der Dispergierung vermischt.

Die Einarbeitung der erfindungswesentlichen Hilfs- und Zusatzmittel in das Oligourethan kann auch vor dessen Fertigstellung beispielsweise durch Abmischung der Hilfs- und Zusatzmittel, mit einem Ausgangsmaterial zur Herstellung des Oligourethans erfolgen, selbstverständlich vorausgesetzt, dass es sich bei dem Hilfs- bzw. Zusatzmittel um eine im Sinne der Isocyanatadditionsreaktion inerte Substanz handelt.

Beim Einarbeiten der Hilfs- und Zusatzmittel kann es in einigen Fällen günstig sein, ein Lösungsmittel mitzuverwenden, um eine bessere Homogenität zu erzielen. Diese Lösungsmittel werden in einer Menge von maximal 20 Gew.%, vorzugsweise maximal 5 Gew.%, bezogen auf dispergiertes Oligo- oder Polyurethan verwendet. Besonders bevorzugt ist selbstverständlich eine lösungsmittelfreie Einarbeitung der Hilfs- und Zusatzmittel. Das gegebenenfalls mitverwendete Lösungsmittel (z.B. Aceton, Methyläthylketon, Isopropanol, Mono- bzw. Diäthylenglykol, Methyl-, Äthyl- oder Butylglykol oder N-methylpyrrolidon) wird im allgemeinen entweder noch in der Schmelzphase oder während bzw. direkt nach dem Dispergiervorgang, gegebenenfalls unter Vakuum, abdestilliert, so dass eine lösungsmittelfreie Dispersion erhalten wird. Einige Lösungsmittel können jedoch auch bis zu einer Menge von maximal 10 Gew.% in der Dispersion verbleiben bzw. der Dispersion erst nach ihrer Fertigstellung zugegeben werden. Diese in der Dispersion verbleibenden Lösungsmittel sollen möglichst einen oberhalb 0°C, vorzugsweise oberhalb 21°C, liegenden Flammpunkt aufweisen. Diese Lösungsmittel werden nur aus anwendungstechnisch Notwendigem mitverwendet und dienen entweder, wie z.B. Mono- oder Diäthylenglykol, als Froststabilisierungsmittel für die wässerige Dispersion oder wie z.B. Butylacetat als Verlauf- und Penetrierhilfe bei der Applikation der Dispersion.

Die Art und Menge des zu verwendenden Hilfs- bzw. Zusatzstoffes hängt einzig und allein von dem beabsichtigten Effekt ab. Erfindungswesentlich ist der Umstand, dass die Zusatzstoffe als solche nicht wasserlöslich oder wasserdispergierbar sind, sondern durchaus hydrophoben Charakter haben und sogar — wie z.B. manche Wachse — in nahezu keinem Medium lösbar sein können.

Auch braucht kein zusätzlicher Emulgator eingesetzt zu werden, wie es beispielsweise nötig wäre, wenn die fertige wässerige Dispersion mit wässerigen Emulsionen, Suspensionen oder Pulvern der unten beispielhaft genannten Zusatzmittel vermischt würden. Erfindungswesentlich ist die Tatsache, dass das Oligourethan bzw. das unter Kettenverlängerung aus ihm gebildete Polyurethan als Umhüllungsmittel, Lösungsmittel, Emulgator und/oder Weichmacher für die Zusatzmittel dient. Hierdurch werden durch das erfindungsgemässe Verfahren Dispersionen erhalten, die bezüglich ihrer Verarbeitbarkeit und der physikalischen Echtheiten der mit ihnen hergestellten Filme vergleichbaren Dispersionen, die aus Dispersionsmischungen bestehen, klar überlegen sind.

Die erfindungsgemäss geeigneten Hilfs- und Zusatzmittel sind:

1. Zelluloseäther wie z.B. Äthylzellulose, Zelluloseester organischer Säuren wie z.B. Zelluloseacetat, Zellulosepropionat, Zellulosebutyrat, Zelluloseacetobutyrat, die durch Weichmacher modifiziert werden können, Zelluloseester anorganischer Säuren, wie z.B. Zellulosesulfat, -phosphat oder die Nitrozellulosearten.

2. Natürliche und synthetische Wachse, wie z.B. Karnaubawachs, Schellackwachs, Montanwachs, Paraffinwachs, Polyäthylenwachs, Esterwachse, Amidwachse, wie z.B. das Diamid aus Stearylamin und Adipinsäure und Säurewachse.

Bei den erfindungsgemäss einzusetzenden Hilfs- und Zusatzmitteln handelt es sich entweder um mit dem Oligourethan verträgliche Substanzen, d.h. um solche, die mit dem Oligourethan homogen vermischbar bzw. die in dem Oligourethan löslich sind, oder um solche Substanzen, die in dem Oligourethan unlöslich sind. In einem solchen Falle ist jedoch auf eine Feinverteilung der Hilfs- und Zusatzstoffe zu achten. Dies bedeutet, dass die Hilfs- und Zusatzmittel in möglichst feinverteilter Form mit dem Oligourethan vermengt werden müssen, was im Falle der Verwendung von festen und unter den Mischbedingungen nicht schmelzenden Hilfs- und Zusatzstoffen eine Teilchengrösse von maximal $10^{-2}$ mm zur Voraussetzung hat. Die unter 1 beispielhaft genannten Zelluloseäther oder -ester stellen die besonders bevorzugten Zusatzmittel dar.

Die beim erfindungsgemässen Verfahren erhältlichen Dispersionen weisen im allgemeinen einen Feststoffgehalt von 2 bis 60, vorzugsweise 20 bis 50 Gew.%, auf, wobei die Menge der erfindungswesentlichen Hilfs- und Zusatzmittel 0,3 bis 50, vorzugsweise 1 bis 20 Gew.%, bezogen auf Feststoff, ausmachen.

Die beim erfindungsgemässen Verfahren erhaltenen Dispersionen sind wie alle Polyurethandispersionen mit anderen nicht-ionischen oder gleichionigen Dispersionen abmischbar. Dies bedeutet, dass die erfindungsgemäss erhältlichen Dispersionen mit anderen Dispersionen, z.B. solchen auf Basis Polyurethan, Polyacrylat, Polybutadien, Polyester oder der verschiedensten Copolymere, wie z.B. auf Basis von Styrol/Butadien-Copolymer, Styrolacrylnitril-Copolymer, Polyacrylsäureestern, Poly(meth-)acrylaten, die gegebenenfalls auch externe Emulgatoren enthalten können, vermischbar sind.

Das erfindungsgemässe Verfahren dient zur Verbesserung der Eigenschaften von wässerigen Dispersionen von Oligo- oder Polyurethanen durch die erfindungsgemässe Einarbeitung der beispielhaft genannten Hilfs- und Zusatzmittel, die ihrerseits die Funktion von Verdickungsmitteln, Verlaufsmitteln, Griffmitteln, Füllstoffen, Haftvermittlern, Hydrophobierungsmitteln oder Trennmitteln erfüllen. Den erfindungsgemäss erhältlichen Dispersionen können jedoch gewünschtenfalls zusätzlich zu den genannten, nach dem erfindungsgemässen Prinzip einverleibten Hilfs- und Zusatzmitteln zusätzliche Hilfs- und Zusatzmittel, wie z.B. Pigmente, Verdickungsmittel, Verlaufsmittel, Griffmittel, Füllstoffe oder Weichmacher einverleibt werden, obwohl dies im allgemeinen nicht erforderlich ist, da die Dispersionen diese anwendungstechnisch oft erwünschten Zusatzmittel bereits enthalten.

Selbstverständlich ist es auch möglich, dem Oligomeren vor, während oder nach dem Dispergieren externe Emulgatoren zuzusetzen. Dies kommt in der Regel aber nur dann in Betracht, wenn mit einem solchen Zusatz Vorteile für die spätere Verarbeitung erzielt werden können. Geeignete Emulgatoren sind z.B. äthoxylierte Alkylphenole mit einem mittleren Molekulargewicht von 400 bis 10 000.

Die wässerigen, erfindungsgemässen Dispersionen können auch im nachhinein mit Isocyanaten modifiziert werden, wie dies in DE-OS Nr. 2708442 beschrieben wird.

Die erfindungsgemäss erhältlichen, Hilfs- und Zusatzmittel enthaltenden Dispersionen eignen sich insbesondere als Beschichtungsmittel beliebiger flexibler oder nicht-flexibler Substrate, wie z.B. Leder, Textilien, Gummi, Kunststoffen, wie z.B. PVC, Glas, Metallen, Papier oder Holz, wobei sie die Funktionen eines Finishs, Lacks oder Klebstoffs erfüllen können. Die Dispersionen eignen sich zur Zurichtung von Leder, als Gleit-, Trenn- oder Schlichtemittel für Glasfasern oder anderer feingezogener Materialien. Die Dispersionen können auch als Dispergierhilfsmittel oder Bindemittel für die verschiedensten organischen oder anorganischen Materialien eingesetzt werden. Ein bevorzugtes Anwendungsgebiet der erfindungsgemässen Dispersionen ist ihre Verwendung als Finish für Leder oder lederähnliche Syntheseprodukte. Hierzu werden die Dispersionen beispielsweise durch Rakeln, Plüschen oder insbesondere Spritzen auf die zu behandelnden Substrate bei 10 bis 60°C, vorzugsweise Raumtemperatur, in einer Menge aufgetragen, die 5 bis 50, vorzugsweise 10 bis 20 g/m² Oligo- bzw. Polyurethanfeststoff entspricht, worauf das beschichtete Substrat bei ca. 20 bis 180°C, vorzugsweise 50 bis 140°C, getrocknet wird.

Die Prozentangaben in den nachfolgenden Beispielen beziehen sich, sofern nichts anderes vermerkt, auf Gewichtsprozente.

*Beispiel 1*

*Ansatz*

| | |
|---|---|
| 300 g | Phthalsäureäthylenglykolpolyester (OHZ 288) |
| 85 g | eines NaHSO₃-Adduktes an propoxyliertes Butendiol (OHZ 261; 70%ig in Toluol) |
| 228,6 g | Hexamethylendiisocyanat |
| 54,6 g | Harnstoff |
| 117,6 g | Karnaubawachs |
| 700 g | entsalztes Wasser |
| 100 g | Formaldehyd (30%ig in Wasser) |

*Durchführung*

Der Polyester und das Addukt werden 30 min im Wasserstrahlvakuum bei 110°C unter Rühren entwässert. Es wird auf 80°C abgekühlt und das Diisocyanat zugegeben. Es wird so lange bei 80°C gerührt, bis ein NCO-Wert von 6,4% erreicht ist (ca. 6 h). Es wird Harnstoff zugegeben und auf 130°C aufgeheizt. Die Schmelze wird verrührt, bis kein Isocyanat mehr gefunden wird. In die NCOfreie Schmelze des so erhaltenen Oligourethans eines rechnerischen Molekulargewichts von ca. 1410 wird bei 120°C das Karnaubawachs in groben Brocken eingerührt. Nach 30minütigem Rühren wird die Schmelze mit 80°C warmem Wasser dispergiert. Es wird 2 h bei 80°C nachgerührt. Anschliessend wird Formaldehyd zugegeben und bei 80°C 1 h verrührt. Es wird auf Raumtemperatur abgekühlt und über ein 100-µm-Sieb abgefüllt.

Man erhält eine feinteilige Dispersion, die im durchscheinenden Licht einen Tyndall-Effekt zeigt und bei einem Feststoff von 50,25% eine Fordbecherviskosität (4 mm Düse) von 24,3 s hat. Der pH-Wert beträgt 4. Die Dispersion ist zentrifugenstabil (3600 tr/min; 20 min).

Die Dispersion ist als Griffmittelzusatz bei wässerigen Lederappreturen geeignet. Die hiermit zugerichteten Leder zeichnen sich durch einen angenehm schmalzigen Griff aus, der durch das Bügeln des Leders bei 80 bis 120°C noch hervorgehoben wird.

*Vergleichsbeispiel 1*

Bei Versuchen, das Karnaubawachs entweder in grobteiliger oder feinteiliger Form mit einer fertigen Dispersion identischer Zusammensetzung zu mischen, erhält man stets zwei Phasen: einmal die feinteilige PU-Dispersion und zum anderen den grob.- bzw. feinteiligen Karnaubawachsanteil, der mit der PU-Dispersion unverträglich ist.

*Beispiel 2*

Ansatz und Durchführung nahezu identisch wie Beispiel 1 mit dem Unterschied, dass anstelle des Karnaubawachses die gleiche Menge des Bisamids aus Stearinsäure und Äthylendiamin eingesetzt wird.

Auch hier erhält man eine feinteilige, zentrifugenstabile Dispersion, die bei einem Feststoff von 45,7% eine Fordbecherviskosität (4 mm Düse) von 41,8 s hat. Der pH-Wert beträgt 4.

Auch diese Dispersion ist als Griffmittelzusatz für wässerige PU-Lederappreturen geeignet und verleiht den Ledern einen angenehmen Wachsgriff.

*Vergleichsbeispiel 2*

Bei analogen Versuchen, wie sie im Vergleichsbeispiel 1 beschrieben sind, wurden mit dem Bisamid ebenso negative Ergebnisse erzielt.

## Beispiel 3

### Ansatz

A
- 230,0 g eines auf Bisphenol-A gestarteten Polypropylenglykoläthers (OHZ 197)
- 71,3 g Phthalsäureadipinsäureäthylenglykolpolyester (OHZ 64,1)
- 40,0 g eines auf Butanol gestarteten Polypropylenpolyäthylenglykolpolyäthers (Molverhältnis Propylenoxid: Äthylenoxid 17:83; OHZ 26)
- 40,0 g eines NaHSO₃-Adduktes an propoxyliertes Butendiol (OHZ 261;. 70,5%ig in Toluol)
- 1,4 g Dimethylolpropionsäure (DMPA)
- 102,1 g 4,4'-Bis(isocyanatocyclohexyl)-methan
- 65,6 g Hexamethylendiisocyanat
- 39,0 g Ammoniak (25%ig in Wasser)
- 46,9 g Nitrozellulose (mit 41,2% Wasser angefeuchtet)
- 1100,0 g entsalztes Wasser
- 30,4 g Isophorondiisocyanat (IPDI)
- 75,6 g Formaldehyd (30%ig in Wasser)
- 16,6 g Monoäthylenglykol

### Durchführung

Die Polyole A werden 30 min bei 120°C unter Rühren im Vakuum entwässert. Anschliessend werden bei 80°C die DMPA zugegeben und nach 10minütigem Rühren die beiden erstgenannten Diisocyanate. Man verrührt bei 90°C solange, bis ein NCO-Wert von 4,6% erreicht ist. Anschliessend wird der wässerige Ammoniak bei 70°C zugegeben. Nach 50minütigem Rühren liegt eine Schmelze eines Oligourethans eines mittleren rechnerischen Molekulargewichts von ca. 1910 vor. In diese Schmelze werden zur Verringerung der Explosionsgefahr 50 g Wasser und sofort darauf die wasserfeuchte Nitrozellulose eingerührt. Nach ½ h wird die Schmelze in dem restlichen Wasser von Raumtemperatur dispergiert. Es wird 2 h bei 45°C nachgerührt und anschliessend bei Raumtemperatur das IPDI entsprechend der Lehre der DE-OS Nr. 2708442 so zugegeben, dass eine sichtbare Schaumbildung unterbleibt. Nach 2stündigem Rühren bei Raumtemperatur wird die Temperatur innerhalb einer weiteren Stunde auf 50°C erhöht und bei 50°C 2 h gehalten. Anschliessend wird der Formaldehyd zugegeben und 90 min bei 50°C verrührt. Abschliessend wird das Monoäthylenglykol eingerührt und die auf Raumtemperatur abgekühlte Dispersion über ein 100-μm-Sieb abgefüllt.

Die feinteilige Dispersion hat bei einem Feststoffgehalt von 29,7% eine Fordbecherviskosität (4 mm Düse) von 12,8 s. Der pH-Wert beträgt 5.

Die Dispersion zeichnet sich bei der Anwendung als wässerige Lederappretur durch einen hervorragenden Verlauf beim Applizieren mit der Spritzpistole aus. Der Griff der Leder wird durch die Nitrozellulose bestimmt und entspricht den Nitroappreturen aus organischen Lösungsmitteln.

## Vergleichsversuch 3

Versuche, die wasserfeuchten Nitrozellulosechips in eine PU-Dispersion gleicher PU-Zusammensetzung einzuarbeiten, verliefen alle mit negativem Ergebnis. Die Nitrozellulose liess sich ohne organische Lösungsmittel nicht in die wässerige Dispersion überführen.

## Beispiel 4

### Ansatz

- 244,6 g Phthalsäureäthylenglykolpolyester (OHZ 288)
- 109,1 g Phthalsäureadipinsäureäthylenglykolpolyester (OHZ 64,1)
- 61,2 g eines auf Butanol gestarteten Polypropylenpolyäthylenglykolpolyäthers (Molverhältnis Propylenoxid: Äthylenoxid 17:83; OHZ 26)
- 49,4 g eines NaHSO₃-Adduktes an propoxyliertes Butendiol (OHZ 261; 70,5%ig in Toluol)
- 154,2 g 4,4'-Bis(isocyanatocyclohexyl)-methan
- 98,9 g Hexamethylendiisocyanat
- 53,7 g Ammoniak (25%ig in Wasser)
- 42,0 g Ölsäureamid
- 1180,0 g entsalztes Wasser
- 45,0 g Isophorondiisocyanat
- 115,0 g Formaldehyd (30%ig in Wasser)
- 21,0 g Monoäthylenglykol

### Durchführung

[Wie Beispiel 3; jedoch ohne Wasserzugabe vor Einrühren des Füllstoffs (Ölsäureamid)]

Die feinteilige Dispersion hat bei einem Feststoffgehalt von 41,2% eine Fordbecherviskosität (4 mm Düse) von 66,9 s. Der pH-Wert beträgt 5.

Die Dispersion ist als Griffmittelzusatz zu wässerigen PU-Lederappreturen geeignet.

## Vergleichsbeispiel 4

Auch Ölsäureamid ist extrem hydrophob und lässt sich daher nicht in eine dem Beispiel 4 analoge Dispersion nachträglich einarbeiten.

## Beispiel 5

### Ansatz

- 160,0 g Phthalsäureäthylenglykolpolyester (OHZ 288)
- 71,3 g Phthalsäureadipinsäureäthylenglykolpolyester (OHZ 64,1)
- 34,0 g eines auf Butanol gestarteten Polypropylenpolyäthylenglykolpolyäthers (Molverhältnis Propylenoxid: Äthylenoxid 17:83; OHZ 26)
- 26,4 g eines NaHSO₃-Adduktes an propoxyliertes Butendiol (OHZ 261; 70,5% in Toluol)
- 112,4 g 4,4'-Bis(isocyanatocyclohexyl)-methan
- 72,1 g Hexamethylendiisocyanat
- 38,9 g Ammoniak (25%ig in Wasser)

16,6 g  Zelluloseacetobutyrat mit einem Acetylgehalt von 15% und einem Schmelzbereich von 170 bis 190° C gelöst in 20 ml Aceton
720,0 g  entsalztes Wasser
45,0 g  Formaldehyd 30%ig in Wasser
16,6 g  Monoäthylenglykol

*Durchführung*

(Wie Beispiel 4; das mitverwendete Aceton wird vor dem Dispergieren im Vakuum abgezogen, eine Nachbehandlung mit IPDI entfällt.)

Man erhält eine feinteilige zentrifugenstabile (3600 tr/min) Dispersion, die bei einem Feststoff von 37,7% eine Fordbecherviskosität (4 mm Düse, DIN 53 211) von 71,2 s aufweist. Der pH-Wert beträgt 5.

Das Produkt führt im Spritzauftrag auf Leder zu hervorragenden, nassreibechten Appreturen.

*Vergleichsbeispiel 5*

Versetzt man eine analoge PU-Dispersion ohne das entsprechende Zelluloseacetobutyrat mit einer entsprechenden Acetonlösung, so hat man kaum zu lösende Probleme mit dem Abdestillieren des Acetons, da die Dispersion extrem stark schäumt. Zudem fällt das Zelluloseacetobutyrat sofort grobteilig aus der acetonischen Lösung aus, wenn die Lösung mit Wasser bzw. der wässerigen Dispersion in Berührung kommt. Man erhält also eine feinteilige PU-Dispersion mit grobteiligem, rasch sedimentierenden Zelluloseacetobutyrat. Diese Dispersion ist unbrauchbar.

*Beispiel 6*

*Ansatz*

244,6 g  Phthalsäureäthylenglykolpolyester (OHZ 288)
109,2 g  Phthalsäureadipinsäureäthylen-glykolpolyester (OHZ 64,1)
61,2 g  eines auf Butanol gestarteten Poly-propylenpolyäthylenglykolpoly-äthers (Molverhältnis Propylen-oxid: Äthylenoxid 17:83; OHZ 26)
45,9 g  eines NaHSO₃-Adduktes an pro-poxyliertes Butendiol (OHZ 261; 70,5%ig in Toluol)
149,8 g  4,4'-Bis(isocyanatocyclohexyl-methan
95,8 g  Hexamethylendiisocyanat
50,0 g  Ammoniak (25%ig in Wasser)
19,8 g  eines Polyätherpolysiloxans mit einem Molekulargewicht von 10 790 und einer Fordbecherauslaufzeit (4 mm Düse, DIN 53 211) von 6 min
9,9 g  eines Zellulosepropionates vom Schmelzbereich 190 bis 210° C, das mit 7% Dioctylphthalt weich-gemacht wurde, gelöst in 15,0 g Aceton
1050,0 g  entsalztes Wasser
45,0 g  Isophorondiisocyanat
115,0 g  Formaldehyd (30%ig in Wasser)
25,0 g  Monoäthylenglykol

*Durchführung*

(Wie Beispiel 5)

Man erhält eine feinteilige, zentrifungenstabile (3600 tr/min) Dispersion, die bei einem Feststoff von 36,4% eine Fordbecherviskosität (4 mm Düse) von 14,4 s hat. Der pH-Wert beträgt 7.

Das Produkt zeigt beim Aufspritzen auf Leder einen hervorragenden Verlauf. Die Lederappreturen aus dieser Dispersion zeichnen sich durch hohe Nassreibungen und angenehm trockenen Griff aus.

*Vergleichsbeispiel 6*

Wie im Vergleichsbeispiel 5 fällt auch hier das Zellulosederivat bei der Berührung mit Wasser aus der acetonischen Lösung grobteilig aus. Das Poly-äthersiloxan ist ohne Zuhilfenahme von Lösungsmitteln nachträglich kaum noch in die Dispersion einarbeitbar.

**Patentansprüche**

1. Verfahren zur Herstellung von lagerstabilen, wässerigen Dispersionen von, eingebaute, die Di-spergierbarkeit in Wasser gewährleistende ioni-sche und/oder nicht-ionisch-hydrophile Gruppen und in Wasser nicht dispergierbare oder lösliche Hilfs- und Zusatzmittel enthaltenden Oligo- oder Polyurethanen durch an sich bekannte Überführung von, eingebaute potentielle ionische, ionische oder nicht-ionisch-hydrophile und gegebe-nenfalls eine Kettenverlängerungs- bzw. Vernet-zungsreaktion ermöglichende Gruppen auf-weisenden Oligourethanen mit einem Molekular-gewicht von 1000 bis 10 000 in eine wässerige Dispersion durch Vermischen mit Wasser, gegebenenfalls unter gleichzeitiger oder anschliessender Kettenverlängerung der Oligourethane durch Reaktion mit einem Kettenverlängerungsmittel und gegebenenfalls unter zumindest teilweiser Über-führung von gegebenenfalls vorliegenden poten-tiellen ionischen Gruppen in ionische Gruppen, dadurch gekennzeichnet, dass man als im Wasser nicht dispergierbare oder lösliche Hilfs- und Zu-satzmittel Zelluloseäther, Zelluloseester anorgani-scher oder organischer Säuren und natürliche oder synthetische Wachse verwendet, und die Oligourethane vor ihrer Durchmischung mit Wasser in flüssiger Phase, gegebenenfalls bei erhöhter Temperatur, mit den in Wasser nicht dispergierbaren oder löslichen Hilfs- und Zusatzmitteln ˙innig durchmischt, oder man die Hilfs- und Zusatzmittel bereits in eine der bei der Herstellung der Oligourethane verwendeten Ausgangsverbindungen einarbeitet.

2. Verfahren gemäss Anspruch 1, dadurch gekennzeichnet, dass man die Durchmischung des Oligourethans mit den Hilfs- und Zusatzmitteln in der Schmelze im Temperaturbereich zwischen 20 und 150° C durchführt.

3. Verwendung der gemäss den Ansprüchen 1 und 2 erhältlichen Dispersionen als Beschichtungsmittel zur Beschichtung flexibler oder nicht-flexibler Substrate.

## Claims

1. Process for the preparation of storage stable, aqueous dispersions of oligo- or polyurethanes containing chemically fixed ionic and/or non-ionic hydrophilic groups which ensure the dispersibility in water and auxiliary agents and additives which are indispersible or insoluble in water, by the known method of converting oligo-urethanes having a molecular weight of 1,000 to 10,000 which contain chemically fixed potential ionic, ionic or non-ionic hydrophilic groups and optionally groups enabling a chain lengthening or crosslinking reaction, into an aqueous dispersion by mixing with water, optionally with simultaneous or subsequent chain lengthening of the oligo-urethanes by a reaction with a chain lengthening agent and optionally with at least partial conversion of any potentiel ionic groups present into ionic groups, characterised in that cellulose ethers, cellulose esters of inorganic or organic acids and natural or synthetic waxes are used as the auxiliary agents and additives which are indispersible or insoluble in water and, before the oligo-urethanes are mixed with water, they are intimately mixed in the liquid phase, optionally at an elevated temperature, with the auxiliary agents and additives which are indispersible or insoluble in water, or the auxiliary agents and additives are already incorporated into one of the starting compounds used for the preparation of the oligo-urethanes.

2. Process according to claim 1, characterised in that mixing of the oligo-urethanes with the auxiliary agents and additives is carried out in the solvent-free liquid state at a temperature in the range between 20 and 150°C.

3. Use of the dispersions obtainable according to claims 1 and 2 as coating compounds for coating flexible or rigid substrates.

## Revendications

1. Procédé de préparation de dispersions aqueuses stables à la conservation et constituées d'oligo-uréthannes ou de polyuréthannes, dans lesquels sont incorporés des groupes ioniques et/ou non ioniques hydrophiles assurant l'aptitude à la dispersion dans l'eau, ainsi que des agents auxiliaires et des additifs non dispersables ou insolubles dans l'eau, par la transformation, connue en soi, d'oligo-uréthannes d'un poids moléculaire de 1000 à 10 000 dans lesquels sont incorporés des groupes ioniques potentiels, ioniques ou non ioniques hydrophiles et permettant éventuellement une réaction d'allongement de chaîne ou une réaction de réticulation, en une dispersion aqueuse par mélange avec de l'eau, éventuellement avec allongement simultané ou ultérieur de la chaîne des oligo-uréthannes par réaction avec un agent d'allongement de chaîne et éventuellement avec transformation au moins partielle des groupes ioniques potentiels éventuellement présents en groupes ioniques, caractérisé en ce que, comme agents auxiliaires et additifs non dispersables ou insolubles dans l'eau, on utilise des éthers de cellulose, des esters de cellulose d'acides inorganiques ou organiques et des cires naturelles ou synthétiques tandis que, avant de les mélanger avec de l'eau, on mélange intimement les oligo-uréthannes en phase liquide et, éventuellement, à température élevée, avec les agents auxiliaires et les additifs non dispersables ou insolubles dans l'eau, ou on incorpore déjà les agents auxiliaires et les additifs dans un des composés de départ utilisés lors de la préparation des oligo-uréthannes.

2. Procédé suivant la revendication 1, caractérisé en ce qu'on effectue le mélange de l'oligo-uréthanne avec les agents auxiliaires et les additifs en masse fondue à une température se situant entre 20 et 150°C.

3. Utilisation des dispersions obtenues suivant les revendications 1 et 2 comme agents d'enduction pour l'enduction de substrats flexibles ou non flexibles.